Europäisches Patentamt

European Patent Office

Office européen des brevets

(19)

(11) Publication number: **0 130 164**
**A2**

# (12) EUROPEAN PATENT APPLICATION

(21) Application number: **84850191.2**

(22) Date of filing: **15.06.84**

(51) Int. Cl.⁴: **H 02 J 13/00**
**H 04 B 3/54**

(30) Priority: **23.06.83 SE 8303359**

(43) Date of publication of application:
**02.01.85 Bulletin 85/1**

(84) Designated Contracting States:
**AT BE CH DE FR GB IT LI LU NL SE**

(71) Applicant: **Luxor Communication Systems AB**
**Box 934**
**S-591 29 Motala(SE)**

(72) Inventor: **Lindgren, Bo**
**Musserongangen 285**
**S-136 34 Tyresö(SE)**

(72) Inventor: **Olesen, Lykke**
**Granvägen 4**
**S-130 40 Djurhamn(SE)**

(74) Representative: **Svanfeldt, Hans-Ake et al,**
**DR. LUDWIG BRANN PATENTBYRA AB Box 1344**
**Drottninggatan 7**
**S-751 43 Uppsala(SE)**

(54) Apparatus for adapting the noise immunity of a tone selective receiver.

(57) Apparatus for reducing the noise immunity of a tone selective receiver to prevailing noise conditions in a mains network, through which signalling takes place between a network unit and a plurality of terminal units subordinated to it, all of which are connected to the network. The tone selection circuit 3 sends a data flag signal DF, the duration of which is measured in a first time measurement circuit. If this duration is short relative the duration of the tone of the transmitted tone signal, more and more capacitors are connected into an intergrating circuit 7 included in the tone selection circuit. The integrating circuit 7 thus determines the noise immunity of the tone selection circuit, until short-duration DF signals are no longer detected. The invention includes the use of a large number of capacitors $C_1$–$C_{2n}$ in the integrating circuit. In a corresponding manner the capacitors are disconnected stepwise each time a second time measurement circuit has determined that no interference has occurred during a given predetermined time period following the connection of a new capacitor into the integrating circuit.

Fig. 7

APPARATUS FOR ADAPTING THE NOISE IMMUNITY OF A TONE
SELECTIVE RECEIVER

The present invention relates to an apparatus for adapting
the noise immunity of a tone selective receiver to
prevailing noise conditions in a mains network via which it
is intended to send carrier wave frenquency modulated tone
signals from a central transmitter to a plurality of tone
selective receivers connected along the network, each
including a tone selecting circuit, known per se, and
intended for demodulating the noise-loaded carrier wave
frequency tone signals, the circuit including a PLL circuit
with a local oscillator, a sampling circuit for sampling the
detected demodulated tone signal in a section thereof
situated between two of its zero crossings, an integrating
circuit for integrating the sampled tone signal and a
trigger circuit for sending a data flag signal when the
integrating circuit voltage exceeds a predetermined trigger
level in the trigger circuit.

Apparatus of the kind described in the introduction are
utilized in conjunction with information transmission in the
mains network. Systems for transmitting information signals
on mains network are known from our Swedish patent
application 7907897-8, from US patent specifications 4 024
528, 4 057 793 and 4 161 720 and from the Swiss patent 447
360. In these known apparatus the information signals are
transmitted from a central distribution unit to units on the
network. Each network unit can communicate with the
distribution unit and with a plurality of terminal units
associated with each network unit. The terminal units
control different consumer loads such as meters for consumed
electrical energy, water and gas, and such as relays,
indicator lamps etc. Each terminal unit can communicate
upwards to its respective network unit. The electrical
information signals transmitted on the mains network are usually frenquency shift modulated high frequency signals with a constant frequency shift. The signals are sent in groups containing a fixed number of signals, usually according to the CCITT code. A signal group consits of an address field, which identifies a network unit or a terminal unit, and this address field is followed by an instruction portion, which is in turn followed by a parity check. In a modified system for sending via the mains network described in our Swedish patent application mentioned above, a frequency shift keying system is used, which means that a high frequency carrier wave is modulated with a plurality of individual frequencies within the audio range. As an example may be mentioned that 11 different tone frequencies $f_0$, $f_1$.....$f_9$ and $f_r$ within the frequency range 1000-2000 Hz are available, and these 11 frequencies are separated from each other by a fixed frequency interval so that they are evenly distributed over the frequency range 1000-2000 Hz. There are thus 11 different tones, of which the tones $f_0$, $f_1$....$f_9$ correspond to the digits 0, 1,...9. The tone $f_r$ represents a repetition caracter denoted r, which indicates that the previous tone is to be repeated. The address to a terminal unit is 12334, for example, which is thus represented by the tone sequence $f_1$, $f_2$, $f_3$, $f_r$, $f_4$.

Signal transmission via the mains network is always accompanied by interference problems, since the mains themselves are subjected to electrical interference in the form of impedence variations depending on load, wide-frequency noise coming from the zero crossings of the alternating curent, transient voltages, shock voltages etc.

In order that a network unit will be able to communicate with complete certainty with each terminal unit subordinate to it, the requirement is that the network unit sends each frequency modulated tone signal with a duration sufficiently long for this tone to be reliably detected by each terminal unit subordinate to the network unit in question.

The farther away a terminal unit is from a network unit along the mains network, the more attenuated and more loaded with noise the signal train sent from the network unit is. On the other hand, the signals a network unit receives from the terminal unit situated farthest away are the weakest and most noise-loaded signals. It will be appreciated that if every individual tone frequency is sent for a sufficiently long time, perhaps in order of magnitude of a minute or so, this tone frequency will be at last detected by the terminal unit farthest away from the network unit. However, terminal units closer to the network unit only require tones of short duration for them to be reliably detected. Each individual tone in a signal message to such a terminal unit situated close to the network unit may accordingly have considerably shorter duration. In the prior art systems discussed above, each tone is sent with the longer duration, so that the network unit will be able to communicate reliably with the most remotely situated terminal unit. This means that it takes an unnecessarily long time for the network unit to poll each of the terminal units.

The present invention has the object of adapting the duration of the tone in a signal message to the individual noise conditions prevailing at each terminal unit. The total time it takes for the network unit to poll each terminal unit in turn is thus reduced.

The present invention also has the object of providing an apparatus with the aid of which the individual noise conditions on the mains network at each terminal unit may be charted at given time intervals, e.g. every second hour. In this way the signalling rate can be adapted to the daily variation of the interference and noise signals on the mains network.

It will be understood that if a terminal unit can receive a signal mesage in which the individual tone have a fixed duration it is also reasonable that the network unit ought to be able to receive a signal message from the terminal unit if this message is sent at the same transmissin rate, i.e. the tone have the same duration as for sending from the network unit to the terminal unit. In accordance with the invention, the terminal unit is therefore adapted to transmit with the same transmission rate as that with which the network unit transmits.

The above objections are obtained with an apparatus of the kind disclosed in the accompanying claims.

An embodiment of the invention will now be described in detail and with reference to the accompanying drawings, on which

Fig. 1 illustrates the construciton of a system for transmitting signal messages through the mains network,

Fig. 2 illustrates a block diagram over certain units essential to the invention and included in a known tone selection circuit,

Fig. 3 is a detailed block diagram of the tone selection circuit illustrated in Fig. 1,

Fig. 4 is a wiring diagram illustrating the function of the integrating circuit in the known tone selection circuit,

Fig. 5 is a voltage diagram illustrating the function of the integrating circuit in Fig. 4,

Fig. 6 is a time diagram illustrating the wave form of a tone signal detected with the known tone selection circuit according to Figs. 2 and 3,

Fig. 7 is a wiring diagram for an apparatus in accordance with the present invention and

Fig. 8 is a time diagram for wave forms obtained on detecting tone frequency signals with the aid of the inventive apparatus.

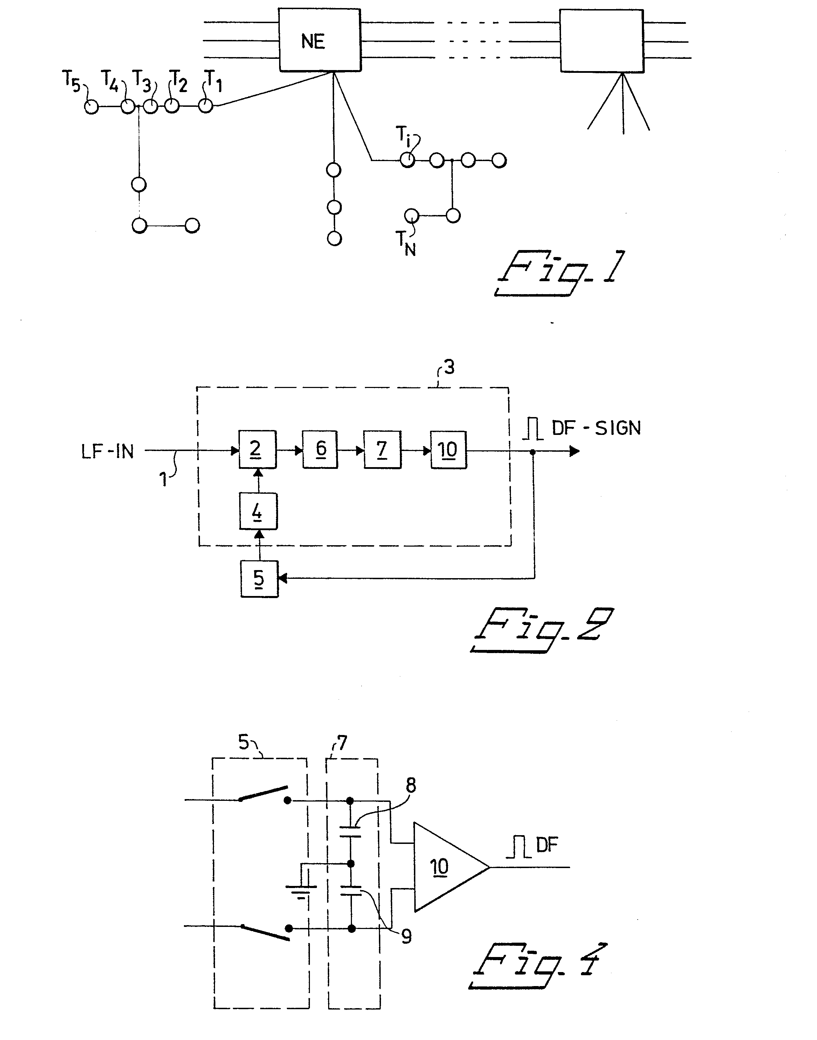

Fig. 1 illustrates the general construction of a system for transmitting information signals between a network unit NE and a number of subordinate terminal units T.

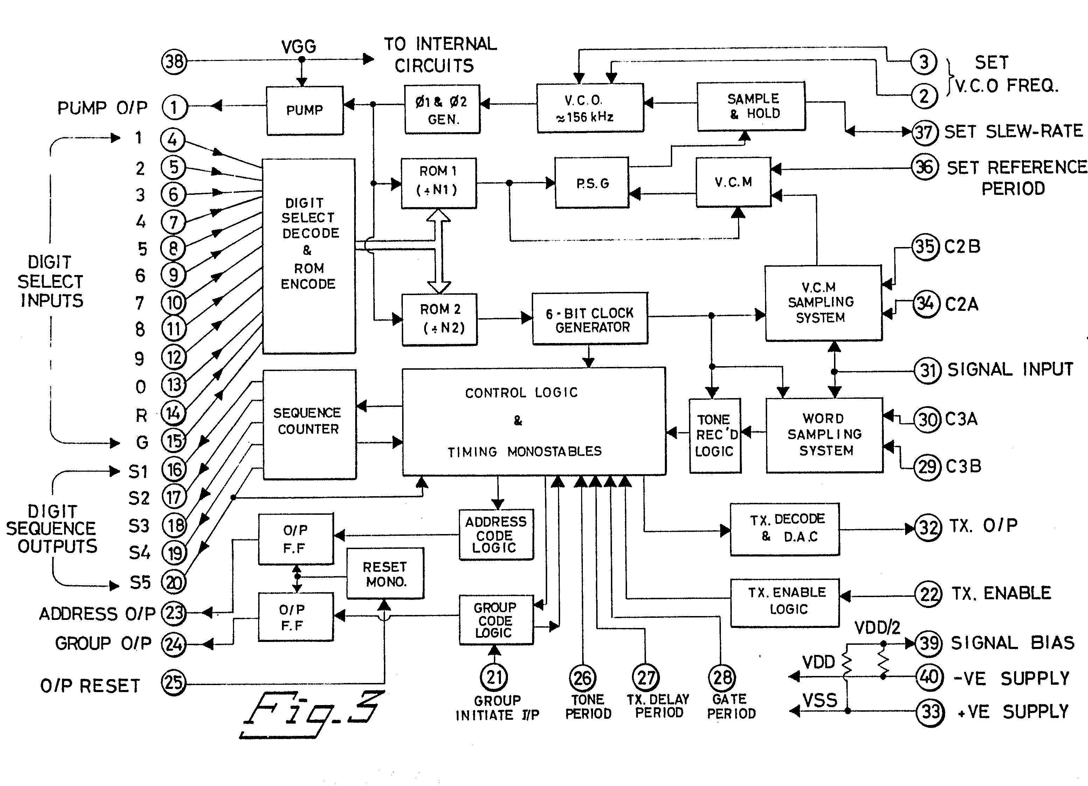

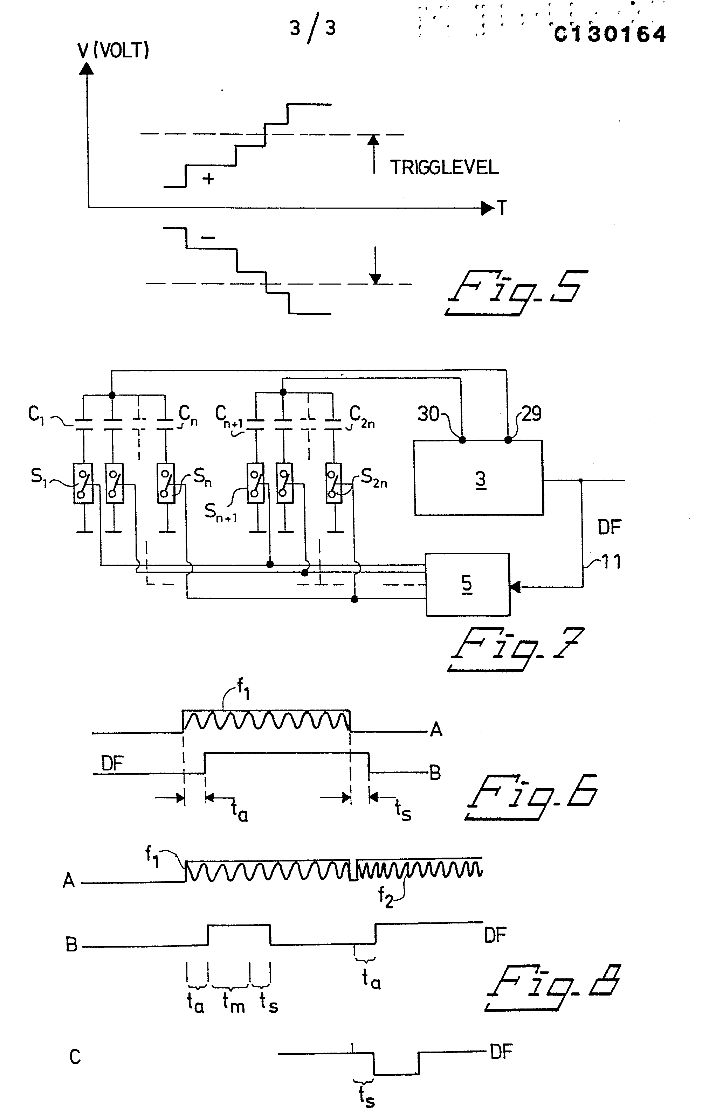

Before the invention is described further, it is suitable to explain the operation of a known tone selection circuit of the kind conventionally used in personel locating systems also referred to as pagin systems. The circuit FX407S is used here as an example, and it is manufactured and sold by Consumer Microcircuits Limited, Wheaton Road, Industrial Estate Each Whitham, Essex CM8 3TD, England. The detailed block diagram of this circuit will be seen from Fig. 3. The units of this circuit esential for understanding the present invention may be illustrated simply as in the block diagram of Fig. 2. As described in the introduction, the network unit and each terminal unit has an FM transmitter and an FM receiver. The transmitters and receivers are of conventional construction and are therefore not described in detail. The way in which they are connected to the mains network is no part of the present invention and is therefore not described in detail either. Assuming that the network unit wants to get in contact with a terminal unit T with the individual address 12334. The network unit sends a signal train consisting of the FM-modulated signal tone frequencies $f_1$, $f_2$, $f_3$, $f_r$ and $f_4$, which are sent consecutively without spaces and are followed by an operation code, consisting of a consecutive sequence of tone signals in coded form. Detected and demodulated LF tones corresponding to the tones $f_1$, $f_2$, $f_3$, $f_r$ and $f_4$ are combined in a consecutive series on a line 1 connected to a PLL circuit 2, included in the tone selecting circuit 3. The terminal unit has its address programmed into a PROM memmory 4. A general type of a micro computer 5 sets a local osialltor conventionally included in a PLL circuit 2 to the expected tone frequency $f_1$, which is the first digit in the address of this terminal unit. When the output signal of the osialltor has the same frequency and phase as the detected, low frequency tone signal $f_1$ the PLL circuit is said to be locked on the incoming tone frequency $f_1$. This frequency locking takes a certain time and is furthermore disturbed by noise which is included in the detected LF signal. To prevent the PLL circuit from losing its frequency locking on the detected LF signal frequency, the tone selection circuit 3 includes a sampling circuit 6, which compares the amplitude of the detected signal with an expected amplitude value during a time interval between two zero crossings of the detected LF signal. If the amplitude value of the detected LF signal is greater than or equal to, the expected amplitude value the sampled signal is applied to an integrating circuit 7, comprising two capacitors 8 and 9. The capacitor 8 is charged by the positive portion of the sampled voltage while the capacitor 9 is charged by its negative portion. It will be appreciated that as the sampling circuit pases through, or accepts, a number of sampling voltages, the capacitors 8 and 9 will be successively charged. The output signal from the integrating circuit 7 is the potential difference between the capacitors 8 and 9, and this output voltage is applied to a trigger circuit 10, which has a fixed trigger level. When the trigger level of the circuit 10 is exceeded, thecircuit 10 will provide an output signal, hereinafter denoted data flag signal DF. As will be seen from Fig. 5, the trigger circuit 10 will provide the data flag signal only after a number of zero crossings corresponding to the pre-determined frequency $f_1$ have been detected, and the sampling circuit 7 has determined that the signal amplitude during the time window as determined by the sampling circuit 7 exceeds the expected value. The time it takes for the tone selection circuit 3 to detect a tone signal is called the attack time, and is denoted by $t_a$ in Fig. 6, in which the upper voltage wave form (Fig. 6A) ilustrates the incoming tone signal, and Fig. 6B illustrates the date flag signal on the output of the trigger circuit 10. It will be seen from Fig. 6B that it takes a certain time $t_s$, called here the lag time, for the tone selection circuit to be set to zero after a tone signal ceases. After such a zero setting, the tone selection circuit is ready for reception and detection of the next consecutive signal frequency $f_2$, which is set by the PROM 4.

The disadvantage with this known tone selection circuit is that the attack and lag times are constant. In order to reliably detect a noise-loaded signal with the system according to Fig. 1, there is thus required that the attack time is long which makes the tone selection circuit sluggish. Signalling through the mains network is thus slow. According to the present invention the integrating circuit 7 in the tone selection circuit 3 is supplemented with the capacitors $C_1$, $C_2$....$C_n$ and $C_{n+2}$....$C_{2n}$ each of which is coupled to a switch $S_1$....$S_n$ and $S_{n+1}$....$S_{2n}$, respectively. The capacitors $C_1$-$C_n$ are intended to be charged during the positive voltage periods of the time window as determined by the sampling circuit, while the capacitors $C_{n+1}$-$C_{2n}$ are intended to be charged during the negative voltage periods. The data flag signal from the tone selection circuit is applied to the computer 5 via a line 11, and in response to certain processes more closely described below the computer 5 controls the connection and disconnection respectively of each succesive capacitor $C_1$-$C_{2n}$ to and from respectively the integrating circuit during the time when no tone signalling takes place through the mains, with the object of varying the attack time so that it becomes optimum, i.e. the least possible, taking into account the noise conditions prevailing at the terminal unit where this tone selection circuit 3 is placed. As a base for measuring the time sequences mentioned below, is the fact that a noise signal is short in relation to a tone frequency signal. The noise signal typically has a duration in the order of 1-10 milliseconds, whereas a tone signal typically has a duration in the order of 50-100 milliseconds. If the noise signal is of greater duration than what has been described above, the apparatus in accordance with the present invention will send the tone signals with a longer duration than what has just been stated.

In the computer 5 there is a first time measurement circuit adapted for measuring the duration of the data flag signal on the output of the tone selection circuit. If the measured time is short and falls below a pre-determined value, e.g. 5 milliseconds, the computer 5 will classify the detected signal as noise, and a control circuit included in the computer then switches the capacitor $C_1$ into the integrating circuit by closing the corresponding switch 1. The attack time for the tone selecting circuit is thus increased and this reacts more sluggishly, i.e. it requires a longer time before the voltage accross the integrating circuit rises above the triggering level for the trigger circuit 10. Let it now be assumed that the first time measurement circuit detects a further interference signal. The control circuit is adapted such that the switch $S_2$ may be now closed to switch the capacitor $C_2$ into the integrating circuit. This process is repated until no short-duration data flag signals occur, i.e. until the attack time has been selected sufficiently long and the tone selection circuit has thus become sufficiently sluggish. The optimum attck time has accordingly been set in this way, taking into account the noise conditions prevailing in the mains network, and this setting has taken place automatically and during the time no tone signalling occurs.

A corresponding sequential switching out or disconnection of the capacitors connected into the integrating circuit takes place as the noice level decreases in the mains network for the terminal in question. Such stepwise switching out of capacitors is controlled by a second time measurement circuit which measures the time passed since an interference signal was last detected. If this time exceeds a pre-determined value, the control means switches out a previously connected capacitor. If no detection of an interference signal takes place during the next time period a further capacitor is switched out etc. It is thus clear that switching in and out of capacitors, i.e. adjusting the sensitivity level of the tone selection circuit, takes place all the time in response to the noise conditions prevailing in the mains. All the capacitors $C_1-C_{2n}$ can have the same value, e.g. 0,01 microfarad or they can have different values. The values are selected such that the sensitivity of the tone selection circuit can be changed in steps which are substantially equal.

In a suirtable embodiment of the invention the switches $S_1-S_{2n}$ are CMOS switches, type 4016.

The aforementioned first and second time measurement circuits can of course be in the form of separate time clocks which are triggered by the data flag signal. Each such time clock cooperates with a fixed reference time clock and with a comparision circuit having an output signal controlling said control circuit, which can be a multiplex circuit, for example.

In the most advantageous embodiment of the invention, the first and second time measurement circuits and the control circuit are included in a conventional micro computer incorporated in the terminal unit in question.

A further embodiment of the invention is described below with reference to Fig. 8, where the wave form A denotes two consecutively detected tone frequency signals $f_1$, $f_2$. It will be understood from the reasoning above that when tone signalling occurs through the mains network, the attack time is the shortest conceivable with regard to the noise in each terminal unit, the presence of a data flag signal will now denote, with the greatest possible probability the presence of an actual tone frequency. A third time measurement circuit included in the computer 5, or consisting of a separate time clock, is used to measure the duration of this tone frequency during a time which is short compared with the duration of the entire tone signal. This time is denoted $t_m$ and is shown in Fig. 8. When the time $t_m$ has run to an end, the time circuit sends a control signal which sets the tone selection circuit to zero and causes the memory 4 to set the lokal oscillator of the PLL circuit 2 to the next tone frequency $f_2$. By setting the time selection circuit to zero while the tone signal $f_1$ is sent, the lag time for the PLL circuit thus takes place during the tone $f_1$, and not during the beginning of the next consecutive signal $f_2$ which would noramlly be the case if the tone selecting circuit were set to zero after the tone frequency $f_1$ ceases, and this is indicated by the wave form C in Fig. 8. The tones election circuit 3 is thus already prepared to receive the next consecutive tone frequency signal $f_2$ before this tone frequency signal is transmitted. It will thus be understood that the rate at which the signal message can be transmitted increases, seen as a whole.

Since each terminal unit in Fig. 1 has its own tone selection circuit adjusted to the highest sensitivity which is possible with regard to prevailing noise, this condition may be utilized in the mains unit NE for determining the shortest duration with which each tone signal can be sent to each individual terminal unit. This takes place such that a computer included in the network unit as a test sends test tone frequency signals of successively increasing duration to each terminal unit during given time intervals, e.g. once every second hour. The network unit NE accordingly transmits a first a test tone frequency signal of short duration. The terminal unit which can receive this test tone sends an acknowledgement signal back to the network unit, whereby this unit now "knows" that these terminal units can receive the signal message, the tone frequencies of which are sent with shortest duration. In reverse, the network unit can now cause the terminal units to send their respective signal messages with this short tone duration. The network unit subsequently sends a new test signal with longer duration than the first one and registers the terminal units which can receive the test signal frequency with this longer tone duration. The sequence is repeated with longer and longer tone durations until the network unit has charted every terminal unit. During the subsequent time period, in this case the next consecutive two hours, all signalling on the network is done with tone lengths adjusted to prevailing noise conditions at each individual terminal unit.

It will be understood that the testing sequence mentioned above is carried out under the control of a central comupter included in the network unit NE, and that this computer can send commands setting the tone duration with which an individual terminal unit shall communicate with the network unit NE.

In the embodiment of the invention described above in conjunction with Fig. 7, the series combinations of

capacitors and switches $C_1S_1-C_nS_n$ are switched in between earth and the connection point 29 of the circuit FX 407 illustrated in Fig. 2, while remaining capacitor and switch combinations are connected between earth and the connection point 30 according to the block diagram in Fig. 3.

Although the invention has been described above in conjunction with a special tone selection circuit, it will be understood that the invention can be applied in conjunction with other tone seletion circuits having a corresponding construction.

The embodiment of the invention desribed above can be modified in may different ways, and varied within the scope of the basic concept of the invention.

CLAIMS

1. Apparatus for adapting the noise immunity of a seletive tone receiver to prevailing noise conditions in a mains network, through which carrier wave frenquency modulated tone signals are intended to be transmitted from a central transmitter (NE) to a plurality of tone selective receivers $(T_1, T_N)$ connected along the network, each of the receivers including a tone selection circuit (3) for detecting the received signal, sampling the detected signal, integrating the sampled signal and sending a data flag signal (DF) when the integrated signal exceeds a predetermined voltage level, characterized by a plurality of series combinations $(C_1S_1.....C_{2n}S_{2n})$ conencted in paralell with the integrating circuit (7), each including a capacitor $(C_i$, where $i = 1....2n)$ and a switch $(S_i$, where $i = 1....2n)$, a first time measurement means for measuring the duration of the data flag signal (DF) and for determining whether this signal represents the detection of an interference signal or a tone frequency signal, a second time measurement means for determining the time which has passed since an interference signal was latest detected, and control means adapted for then connecting a capacitor $(C_i)$ into the integrating circuit (7) each time the first time measurement means determins the presence of interference up until no interference signals are detected, and subsequently for disconnecting connected capacitors $(C_i)$ when no interference is detected during the time measured by the second time measuring means, the said connecting and disconnecting of a capacitor $(C_i)$ taking place by operating the switch $(S_i)$ of the respective capacitor.

2. Apparatus as claimed in claim 1, characterized in that the first time measurement means is adapted to interpret the detected signal as noise if the duration of the date flag is less than a determined value, which is short in relation to

0130164

the duration of the transmitted tone signal.

3. Apparatus as claimed in claim 2, <u>characterized</u> in that the first time measurement means is adapted to interpret the detected signal as a useful signal if the duration of the data flag signal is greater than said determined value.

4. Apparatus as claimed in claim 3, <u>characterized</u> in that a control means is arranged to set the tone selection circuit to zero a predetermined time after the first time measurement means has determined that the detected signal is a useful signal.

5. Apparatus as claimed in one or more of the preceding claims, <u>characterzed</u> in that the first and second time measurement means and said control means constitute parts of a computer included in each terminal unit.

6. Appartus as claimed in one or more of the previous claims, <u>characterized</u> in that the transmitter (NE) is adapted to transmit during determined time periods a carrier wave having modulated theron tone frequency test signals with successively longer duration, in that on receiving such a test tone signal the receiver in each terminal unit is adapted to send a acknowledgement signal to a central receiver at the transmitter and in that a central computer is disposed at the central receiver, this computer being adapted to register the test tone with the shortest duration that each receiver is capable of receiving, and in that with guidance from the registrerad values for the durations of the test tones the central computer is adapted to control the central transmitter, as well as the transmitters in each terminal unit, so as to transmit with the shortest tone duration which the terminal unit in question was able to receive during the subsequent time period.

1/3

0130164

*Fig_1*

*Fig_2*

*Fig_4*

Fig.3

*Fig.5*

*Fig.7*

*Fig.6*

*Fig.8*